# EUROPEAN PATENT APPLICATION

(11) **EP 1 628 221 A2**
(43) Date of publication of application: **22.02.2006**
(21) Application number: 05014477.3
(22) Date of filing: 04.07.2005
(51) Int. Cl.: G06F 11/32

(54) **Console software for facilitating the administration of failures in agent services**

(30) Priority: 30.07.2004 US 902904
(71) Applicant: Hewlett-Packard Development Company, L.P., Houston, Texas 77070 (US)
(72) Inventor: Shaughnessy, Jay, Cherry Hill, NJ 08003 (US); Tripp, Travis Scott, Fort Collins, CO 80525 (US)
(74) Representative: Schoppe, Fritz

(57) **Abstract**

A Java-enabled computer system (AP₁) hosts an application server (11) and a database (13). The application server hosts an agent server (15), a database access layer (17), and a servlet container (19). The agent server hosts a set of software agents (AGI, AGR, AGi, AG₂ ...AGN) for responding to customer requests. The agents can be invoked in series to meet a customer request. When one of the agents fails, an administrator is notified. The administrator can access an administration console (30) using a browser (43). From the administration console, the administrator can edit the request and resubmit it directly to the agent suffering the failure without re-invoking preceding agents that completed their services successfully.

## Description

BACKGROUND OF THE INVENTION

The present invention relates to data processing and, more particularly, to Java-based programming environments. A major objective of the invention is to provide a powerful and easy-to-use administration interface for a J2EE ("Java 2.0 enterprise edition") environment.

Much of modern progress is associated with the increasing prevalence of computers in almost all areas of society. Commercial entities often attempt to provide easy-to-use and entertaining interfaces for customers who access them over the Internet. To this end, certain computing languages and environments, e.g., J2EE (an enterprise "edition" of the Java programming language from Sun Microcomputers) and .net (pronounced "dot net" and available from Microsoft Corporation), allow a server computer to install compact code on a customer's computer to provide enhanced interactivity from the customer's perspective.

Providing an easy-to-use interactive interface for a customer can require a lot of communication between the customer's computer and a vendor's computer network. Commonly, synchronous messaging is used. That is, the computer receiving a message acknowledges receipt to the sender. In the meantime, the sender may be waiting for the acknowledgement. This waiting can impair computer performance in general and the illusion of real-time interaction in particular.

Asynchronous communication can improve performance in some situations by foregoing acknowledgements. However, since the sender is not informed whether a message was received, it is more important that delivery be guaranteed. The guarantee must be provided by the messaging protocol and typically involves storing messages and their delivery statuses in non-volatile memory, e.g., hard disks.

In J2EE, asynchronous communication is provided by JMS, the Java Message Service. Processing of an asynchronous JMS message is performed using "message-driven beans". The underlying J2EE application server provides for fail-safe delivery of messages to message-driven beans. In principle, the message-driven beans along with the rest of the J2EE provide a powerful programming environment for enterprise computing. On the other hand, the training required for J2EE programming can be quite extensive.

U.S. Patent Application (HP ID 200310827-1) discloses an agent-server system for a J2EE environment that provides a high-level interface to message-driven beans, enabling those without Java J2EE programming skills to develop J2EE applications. The agent server provides for software agents that can be invoked to perform requested services. The agents, their services, and data requirements can all be defined in a configuration file. Adding or changing agents can be achieved simply by editing the configuration file.

If the agent that provides the ultimate requested service has data prerequisites not met by the request itself, intermediate agents can be invoked to obtain the required data and meet the prerequisites. The agents are "invoked serially" in the sense that some agents complete their services before others are invoked, even though some intermediate agents are invoked in parallel.

While message delivery is guaranteed, agent success in performing a service is not. If, perhaps after several retries, an agent cannot perform a service, the request that led to invocation of that agent cannot be met. In this case, a notice, e.g., by email, to a system administrator provides for manual intervention in case of agent failure. However, while agent development does not require coding expertise, debugging failures does. The expertise required for intervention and debugging contributes heavily to the cost of maintaining an agent-server system. What is needed is a way to reduce the training and expertise required to maintain an agent-server system.

SUMMARY OF THE INVENTION

The present invention provides Internet-browser-accessible (e.g., conforming to http protocol) administration console software for examining the status of requests that have failed while being handled by one of a series of software agents. Data associated with the request can be edited and resubmitted to the agent involved in the failure. Preceding agents (that successfully completed their service in handling the request) in the series need not be reinvoked to handle the request; however, the invention provides for reinvoking any agent if desired.

If an agent cannot perform the service requested of it (perhaps after a number of retries), an agent can notify a system administrator (e.g., by e-mail) of the failure. The administrator can then use a browser to access the administration console. The administration console can permit the administrator to examine the data and thus the status of the failed request. For example, the administrator can search for recent failures and select one or more of interest to address. Preferably, an e-mail notice provides a link that accesses the subject failure directly through the administration console.

The invention permits request data to be edited and provides access to administration-specific options, e.g., to analyze the cause of a failure. For an example, in some systems, a debug level can be selected by adding optional data. Resubmitting a request at a higher debug level can return more detailed information about a failure; the more detailed information can assist problem identification. Other administration-specific data can request that certain values be returned or certain runtime operations to be validated, e.g., to aid failure analysis.

Preferably, the administration console provides for *ad hoc* requests by the administrator for trouble-shooting and other testing purposes. The console can allow the administrator to generate a blank ad hoc request. The administrator can then select an agent and one of the services provided by the agent, and supply data for the ad hoc request. Preferably, if an actual request is being displayed, the administration console provides for copying the associated data to an ad hoc request to facilitate trouble-shooting.

The invention takes advantage of familiar browser software to provide remote or local access to the inner workings of an agent software system, without requiring knowledge of the programming language used to code the agents. Administration-specific options can be exercised on a per-request basis. In addition, failed requests can be resumed without repeating services that have already been successfully completed. Moreover the administration console can provide an effective tool for agent development. These and other features and advantages of the invention are apparent from the description below with reference to the following drawings.

BRIEF DESCRIPTION OF THE DRAWINGS

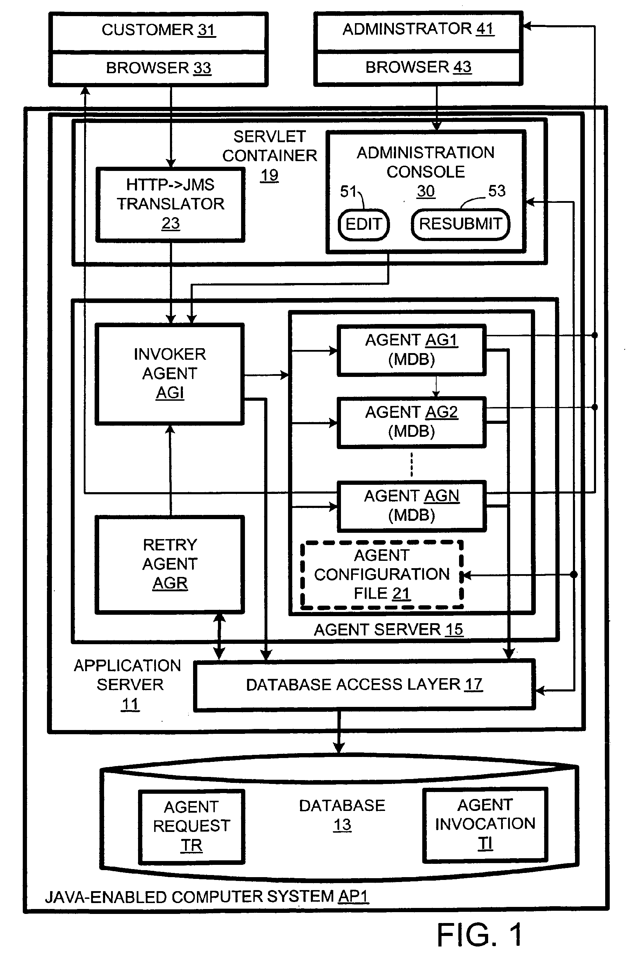

FIGURE 1 is a schematic block diagram of a system in accordance with the present invention.

FIGURE 2 is a flow chart of a method of the invention practiced in the context of the system of FIG. 1.

FIGURES 3-7 are sample displays provided by the system of FIG. 1 and method of FIG. 2.

DETAILED DESCRIPTION

In accordance with the present invention, a Java-enabled enterprise computer system AP1 hosts an application server 11 and a relational database 13. Application server 11 hosts an agent server 15, a database access layer 17, and a servlet container 19. Agent server 15 in turn hosts a number of software agents AGI, AGR, AG1, AG2, ...., AGN and an agent configuration file 21 in XML format Servlet container 15 hosts an translator 23 for converting http (hypertext transfer protocol) messages used by web browsers to Java Messenger Service (JMS) messages used by Java. Servlet container 19 further hosts an administration console 30 in accordance with the invention.

Agent server 15 is designed to respond to customer requests for services. A customer request can be made using customer's World-Wide Web browser 33, which transmits the request using the http protocol to computer system AP1. The message is provided to translator 23, which converts the request to the JMS protocol. The resulting JMS request is provided to invoker agent AGI. Agent AG1 stores the request, customer identification data, and customer-provided data (e.g., delivery address) in an agent request table TR of database 13.

Agent server 11 drives off a single, required, configuration file 15. All active agents must register in this file 15. Each agent is minimally described by:

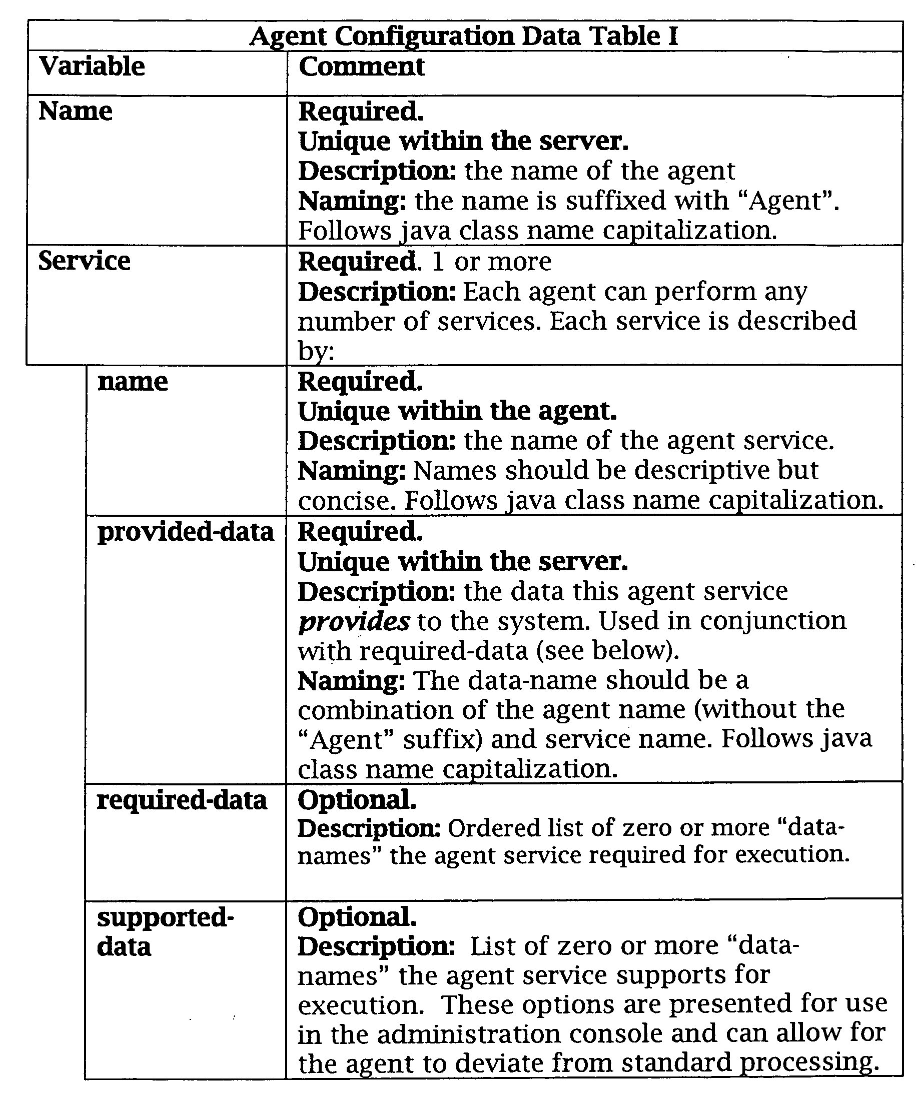

Related services should be grouped under a single agent as service addition has low overhead whereas agent overhead is higher. A client request consists of an Agent-Service pair. For example, "BillingAgent" is an agent name, while "SendInvoice" and "SendReminder" are services performed by that agent. In this example, the provided data would be "BillingSendinvoice" or "BillingSendReminder". Agent services providing the required data-names will be invoked as necessary, in the specified order, to gather the required data. In addition to agent provided data-names, a service can also reference other registered data-names. Examples of supported-data are options that affect debug levels, return values, or runtime validations. These data-names do not need to be registered or provided by other agents. A description can be provided for display to the administrator.

In addition to agent registration, configuration file 15 also registers all non-agent data-names available for use in the agent server as "required-data", as defined in Table I. Available agents can be invoked using a JMS client message or using an HTTP request (which is translated to a JMS Message). Both invocation methods require the invoker to supply any (registered) required data that cannot be supplied by existing agents.

For catastrophic crashes, a persistent store is used for recovery purposes. Recovery can be performed at agent server startup, or manually. Every agent request (and its agent data) is stored in the agent database prior to processing. Additionally, each agent invocation is stored in the database. At recovery-time, all non-completed agent requests are restarted, taking into account all associated, successful, agent invocations up to that point. Status information will be stored with each invocation request.

The persistent store will also be used to gather simple statistics about agent invocation and performance. The agent server uses a persistent store for recovery purposes and statistic gathering. Each agent request and agent invocation is stored in the database. Agent data, duration information, and status are updated during processing. Upon successful completion of the agent request the entry is flagged as complete for historical tracking.

| **Agent Request Table II** | |
|---|---|
| **Variables** | **Comments** |
| REQUEST_ID | Primary Key |
| AGENT_NAME | The requested agent name |
| SERVICE_NAME | The requested agent service |
| AGENT_DATA | The agent data |
| START_TIME | timestamp for start request processing |
| END_TIME | timestamp for end request processing |
| STATUS | Status of the client request |
| STATUS_DETAIL | Detailed textual description explaining the status |

| **Agent Invocation Table III** | |
|---|---|
| **Variables** | **Comments** |
| MESSAGE_ID | Foreign Key, PK1 |
| AGENT_NAME | The requested agent name |
| SERVICE_NAME | The requested agent service |
| START_TIME | timestamp for start agent processing |
| END_TIME | timestamp for end agent processing |
| STATUS | Status of the agent invocation |
| STATUS_DETAIL | Detailed textual description explaining the status |

The agent server has no way of knowing what work an application agent performs. It is the responsibility of the agent code to be able to handle re-invocation. In other words, if a previous, incomplete invocation performed work that could affect re-invocation success it is the responsibility of the agent to handle the re-invocation in a way to ensure success. To aid the agent the agent server provides a mechanism for the agent code to know if this is an original invocation or a re-invocation.

The fault-tolerance scheme uses simple status to guide handling of the request, as set forth in Table IV. In an alternative embodiment, different status variables are used.

| **Status Review Table IV** | |
|---|---|
| **Variable** | **Comment** |
| ACTIVE | Assigned on initial database storage of the request. Remains until request processing comes to an end via success or failure. |
| SUCCESS | Assigned on successful completion of the request. |
| PENDING | Assigned when an agent invocation fails but an automatic retry is scheduled. The request is not completed. |
| FAILURE | Assigned when an agent invocation fails and requires human intervention. The request is not completed. |
| TERMINATED | Final status for all requests that don't complete successfully. Set when: Administrator terminates a failed request via the administration console Administrator resubmits a failed request via the administration console. This generates a new request. Automatic retry resubmits a failed request. This generates a new request. |

For example, a customer 31 can request a projected delivery date for goods purchasable from the enterprise owner of system AP1. In response to this request, invoker agent AGI examines configuration file 21 and determines that agent AGN provides a service of projecting delivery dates. However, to determine a delivery date, agent AGN requires information on any holidays or other considerations that might affect the delivery schedule. Invoker agent AGI examines configuration file 21 and determines such information is provided by agent AG2. Thus, invoker agent AGI must invoke agent AG2 before agent AGN.

In this example, Invoker agent AGI further determines from configuration file 21 that both agents AG2 and AGN require a delivery address with a nine-digit zip code. In this case, however, customer 31 has provided a delivery address with only a five-digit zip code. Invoker agent AGI determines from configuration file 21 that agent AGI can determine a nine-digit zip code from a street address, which customer 31 has provided.

Accordingly, invoker agent AGI invokes agent AGI and logs the invocation in invocation table T1 of database 13. Agent AG1 accesses a table (not shown) that provides a nine-digit zip code based on the street address information provided by customer 31. Agent AG1 updates agent request table TR to add the nine-digit zip code to the request data, invokes agent AG2, and logs its own success in agent invocation table TI.

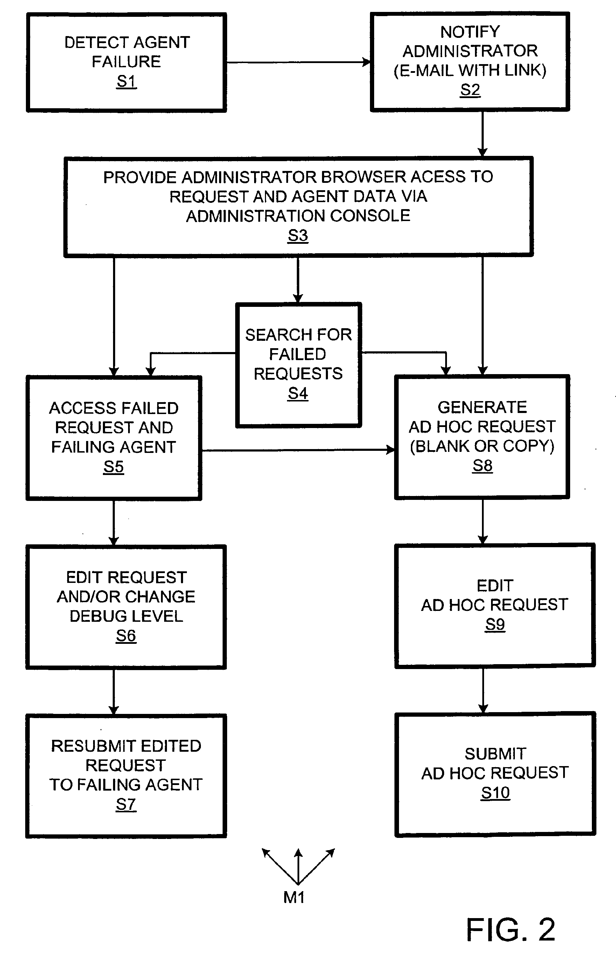

Agent AG2 is configured to access a server of a third-party delivery company to determine what holidays and other considerations must be factored in to calculate a delivery date. However, an initial attempt to acquire the holiday information fails. As configured, Agent AG2 invokes retry agent AGR that reinvokes agent AG2. However after a number of failed attempts (specified in configuration file 21 as part of the definition of agent AG2, agent AG2 logs a failure in invocation table TI. This failure triggers a method M1 of the invention, flow-charted in FIG. 2.

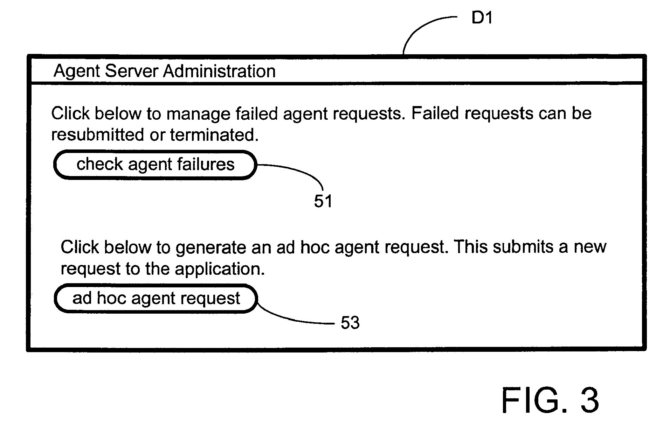

Step S1 of method M1 is the detection of the failure that gets logged. Step S2 involves notifying administrator 41 of the failure. In the illustrated embodiment, the failed agent sends an e-mail notice to administrator 41. In response, administrator 41 can access administrative console 30 at step S3, bringing up a "Agent Server Administration" display D1 such as that shown in FIG. 3. Activating "Search Agent Failures" button 51 leads initiates a search for failure events; a "Ad Hoc Request" button 53 is discussed later.

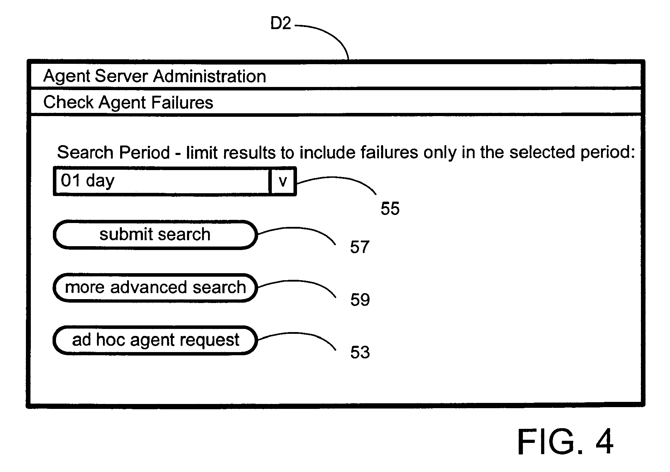

Step S4 of method M1 involves searching for failed requests. Most displays provided by M1 provide an option for initiating a search for failed request, so step S4 can be performed after almost any step S3-S10 involving administration console 30. From the display D2 of FIG. 3, clicking on the 'check agent failures" button 51 brings up the "Check Agent Failures" display D2 of FIG. 4. This display includes a drop down menu 55 that provides administrator 41 a choice of durations (e.g., 1 hour, 2 hours, 1 day, 2 days, 3 days, 1 week, 1 month, 1 year) up to the present over which to search for failures. Once an appropriate duration is selected, administrator 41 can activate a "submit search:" button 57. Typically, the failed request of concern to administrator 41 is returned by the search in view of its recency.

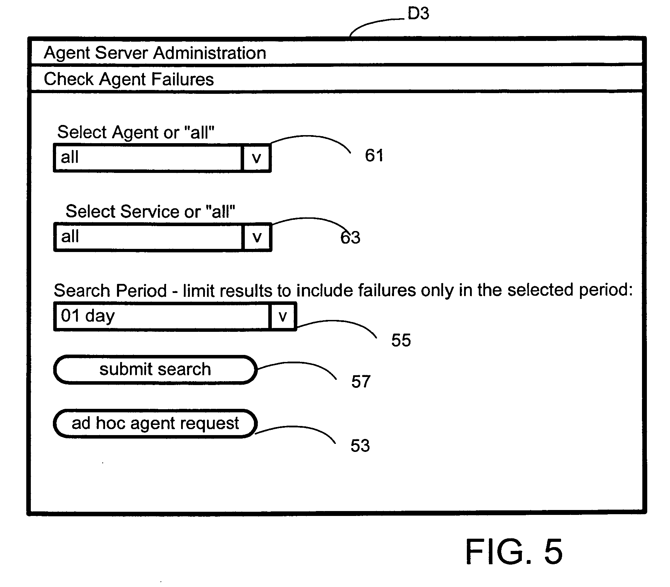

Assuming failures are infrequent, the list of failures returned in a search should be small and it should be easy to identify the search of interest. However, activating a "more advanced search" button 59 brings up an alternative search display D3, shown in FIG. 5. This more advanced search display D3 provides a drop-down menu 61 that provides for filtering search items by agent and another drop-down menu 63 for filtering by service of a selecting agent. "All" sections for these two submenus make the advanced search functionally equivalent to the simpler search of display D2 of FIG. 4. In an alternative embodiment, further search options are provided.

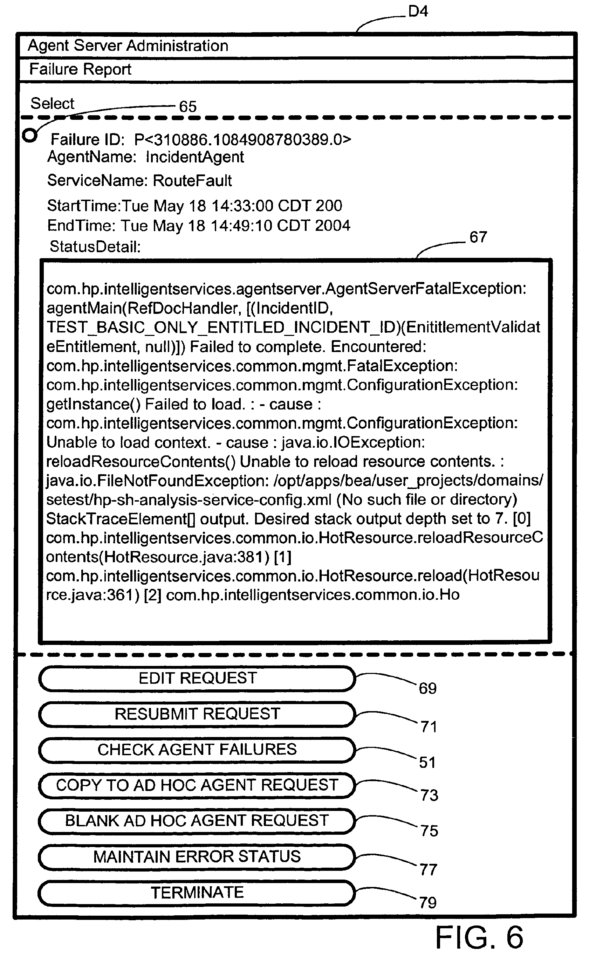

The search for failures allows administrator 41 to navigate to the failed request of interest. For the illustrated example, a single failure event is returned resulting in "Failure Report" display D4 of FIG. 6 (including sample data). The search thus allows access to the failed request of interest in step S5 of FIG 2. If more than one failure is returned in response to a search at step S4, administrator 41 can select one for more detailed review by checking radio button 65. The buttons at the base of display D4 then apply to the checked failure event. Preferably, the e-mail notice of step S2 includes a link that, when activated, automatically returns only the failure event that triggered the notice. Thus, failure report display D4 is presented directly in response to administrator 41 activating the email link without having to further negotiate displays D1, D2, or D3.

"Agent Server Administration" "Failure Report" display D4 provides a unique failure ID number, identifies the agent and service involved, indicates the invocation "start time" and the failure "end time". Details regarding data collected and error and other messages received are listed in a StatusDetail box 67, which becomes scrollable if the amount of text exceeds the box capacity. If administrator 41 realizes that adding or changing data presented in the status detail box 67 may address the failure, access to editing the data can be obtained by activating an "Edit Request" button 69. Once the status data has been edited at step S6, administrator 41 can resubmit at step S7 the request to agent AG2 by activating a "Resubmit" button 59; the resubmission is to the failed agent, preceding agents (e.g., AGI and AG1) that have successfully performed their services need not be reinvoked.

Again, continuing the example, assume that the external service had been recently programmed to inquire whether a date provided in a query was in month-first or day-first format when that is ambiguous, but that agent AG2 had not be updated to respond to this query. Examination of the status detail shows the failed request. The administrator clicks on "Edit Request" button 69 and changes a date so that the month is spelled out rather than represented numerically. Then the administrator clicks on "Resubmit" button 71 and agent AG2 is reinvoked, but now with an unambiguous date range. Agent AG2 updates request table TR with the holiday information, invokes agent AG3, and logs its own success in invocation table TI. Agent AG3 then provides the requested delivery date to customer 31 via browser 33.

In addition to allowing data required for a service to be added or changed, the edit feature of administrative console 30 can permit a monitoring options to be changed. For example, a higher debug level or enhanced runtime validation can be used to assist trouble-shooting. Depending on circumstances, the different result may cause the request to succeed or it may otherwise assist trouble shooting. Expanding on the debug level example, each agent could be configured to permit different debug modes, each mode assigning respective events to be recorded while an agent is active. A low-level debug mode (in which few events are monitored and recorded) can be used by default for high performance. However, when a failure occurs, the status detail can be edited to specify a higher debug level so that more events are recorded when the request is resubmitted to the agent. The higher debug level can be used to identify problems with greater precision. In addition, options that affect the outcome of a request can be made; for example, a different return value can be requested.

If the failure report was arrived at directly from the email notice rather than manually searching, a manual search may still be desirable to find related failures to assist in troubleshooting. The "check agent failures" button 51 in display D4 can then call up a display D2 in FIG. 3 to select a time frame.

Administration console 30 further provides for "ad hoc" requests to be generated at step S8. These, if completed successfully, do not result in responses to a customer, but to the administrator. The ad hoc requests can be used to test and trouble shoot agents. For convenience in trouble shooting relating to a failure notice, administration console 30 provides for copying status details of a failed (or other) request to a new request using the "copy to ad hoc request" button 73. The new request can then be edited at step S9 as required for testing.

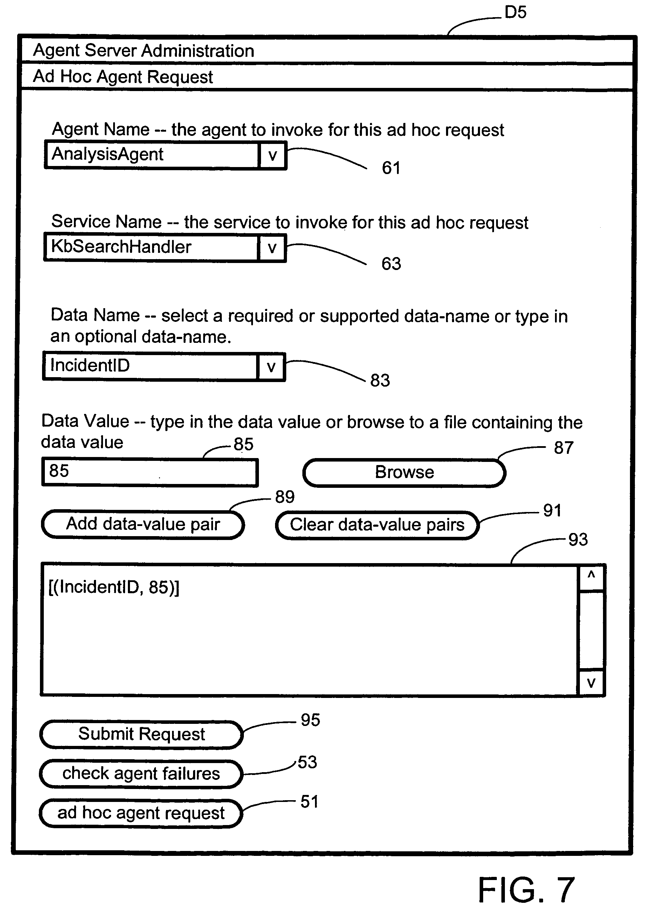

If the administrator prefers, a request can be generated from scratch by using the "blank ad hoc request" button 75, to which data can be added by "editing". FIG. 7 shows display D5 with an originally blank ad hoc request having some data added. Note that "Ad Hoc Agent Request" button 53 present in displays D1-D3 is functionally identical to blank ad hoc request button 75 so step S8 can be reached from other method steps S3-S9.

An ad hoc request display such as D5 includes agent selection drop-down menu 61, service selection drop-down menu 63, a data-name drop-down menu 83 (allowing selection of data associated with the selected service), a data value entry box 85, and a browse button for locating a non-required data item in a file. Once the file is selected, the data is automatically entered into box 85. Once the desired data is shown in data value box 85, activating an add data value pair button 89 cause the data name in selected in menu 83 and the data value presented in box 85 to be entered into a status box 93, which corresponds to status detail box 67 in FIG 6. Selected data-value pairs in box 93 can be removed by activating a "clear data-value pairs" button 91. Once the ad hoc request is in the desired form, it can be submitted to the selected agent by activating a submit request button 95. Alternatively, an administrator 41 can choose to activate a check agent failures button 51 or start a new ad hoc request (essentially clearing the present ad hoc request) by activating ad hoc request button 53.

When an ad hoc request is generated or other action is taken, administrator 41 may close the original failure display D4 and either terminate the request or maintain its error status. The latter selection, involving activating a "maintain error status" button 77, preserves the failure data for further investigation. In this case, the request remains dormant until accessed again by the administrator (e.g., after the problem causing the failure has been fixed). Activating the "terminate" button 79 terminates the failure report so that it is no longer accessible. In this case, the original customer request can no longer be fulfilled. Preferably a notice of this fact is provided to the customer, who can be invited to resubmit the request at a later time.

An administrator need not wait for a failure to access the administration console. A browser can be used to navigate to a home display D1 for the administration console, shown in FIG. 3. From this display, one can select a blank ad hoc request or search agent failures.

While the illustrated embodiment involves a J2EE environment, the invention provides for administration of serially invoked software agents in other environments, including various personal computer and server operating systems and programming environments. While changing monitoring options such as a debug level is effected by adding data to a data field, the invention alternatively allows setting of monitoring options by other means, such as selecting a corresponding radio button. These and other variations upon and modification to the illustrated embodiments are provided for by the present invention, the scope of which is defined by the following claims.

## Claims

1. An agent administration console for a software agent system providing for serial invocation of agents to meet a request, each of said agents performing one or more services while handling said request, each of said services being defined by configuration data, said console comprising:
an Internet-browser accessible display of a status of a request that has been halted due to a failure event while being handled by an agent performing a requested service with respect to said request;
an Internet-browser accessible editor for editing said data associated with said request; and
an Internet-browser-activated submitter for resubmitting said request with edited data to said agent.

2. An agent administration console as recited in Claim 1 wherein said Internet-browser accessible editor permits trouble-shooting options associated with a service to be changed prior to resubmission of said request.

3. An agent administration console as recited in Claims 1 and 2 further comprising failure search means for displaying data status of failure events meeting selected search criteria.

4. An agent administration console as recited in Claim 1 further comprising for generating an ad hoc request for a selected agent service.

5. An agent administration console as recited in Claim 4 wherein said data status is copied to said ad hoc request when said ad hoc request is generated.

6. A method comprising:
detecting a failure in a service performed on a customer request handled by invoking software agents serially, said service being performed by one of said agents;
notifying an administrator electronically of said failure;
responding to Internet-browser activity by said administrator by:
providing access to said request in a status corresponding to a time of said failure,
providing editing access to data relating to said request, and
providing for resubmission of said request to said agent.

7. A method as recited in Claim 6 wherein said notifying involves presenting said administrator with a link which when activated calls up a display presenting said data.

8. A method as recited in Claim 6 wherein said responding further includes allowing said administrator to initiate an ad hoc request and submit it to said agent.

9. A method as recited in Claim 8 wherein said responding further includes allowing said administrator to generate said ad hoc request so that it initially includes some of said data relating to said customer request.

10. A method as recited in Claim 6 wherein said responding includes allowing said administrator to search for other agent failures.
